(19) Europäisches Patentamt

European Patent Office

Office européen des brevets

(11) **EP 1 111 256 B1**

(12) **EUROPEAN PATENT SPECIFICATION**

(45) Date of publication and mention
of the grant of the patent:
**04.08.2004   Bulletin 2004/32**

(51) Int Cl.⁷: **F16C 31/04**

(21) Application number: **99125421.0**

(22) Date of filing: **20.12.1999**

(54) **Linear Bearing**

Linearlager

Palier linéaire

(84) Designated Contracting States:
**CH DE FR GB IT LI NL**

(43) Date of publication of application:
**27.06.2001   Bulletin 2001/26**

(73) Proprietor: **Hihaisuto Seiko Co Ltd
Itabashiku, Tokyo (JP)**

(72) Inventor: **Nakajima, Yoshitaka
Ageo city, saitama Pref. (JP)**

(74) Representative: **Henkel, Feiler & Hänzel
Möhlstrasse 37
81675 München (DE)**

(56) References cited:
**WO-A-98/48189          DE-A- 4 438 651
DE-B- 1 144 547          FR-A- 2 251 745
FR-A- 2 367 217          US-A- 3 353 876**

**Description**

FIELD OF THE INVENTION

The present invention relates to a linear bearing, particularly a linear bearing used for a high load and/or an offset load, for example, in a guide of a press or a guide of a die set.

BACKGROUND OF THE INVENTION

Linear bearings of various structures have been commercialized. Document US-3 353 876 describes an antifriction bearing.

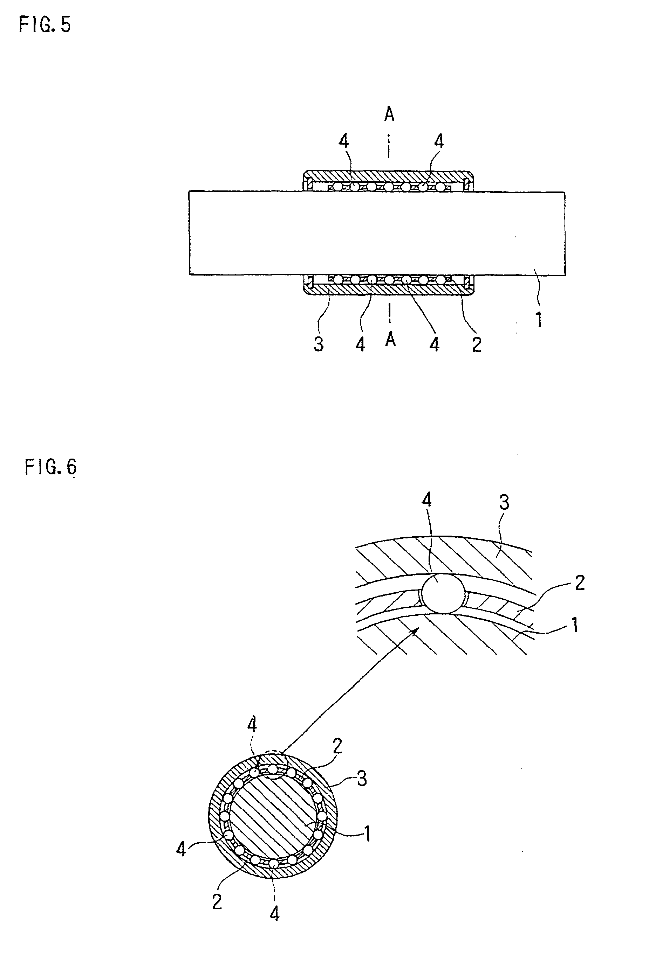

Figs. 5 and 6 show a linear bearing with a conventional structure as a first example (A). Fig. 5 is a vertical sectional view, and Fig. 6 is an A-A sectional view of Fig.5 with a partially expanded view.

The linear bearing shown in these drawings is composed of a guide shaft 1, an outer cylinder 3 provided around the guide shaft 1 relatively movably in the axial direction, many rigid balls 4 provided between the guide shaft 1 and the outer cylinder 3, and a cage 2 provided in the clearance between the guide shaft 1 and the outer cylinder 3 for holding the many rigid balls 4. This linear bearing is called a linear ball bearing.

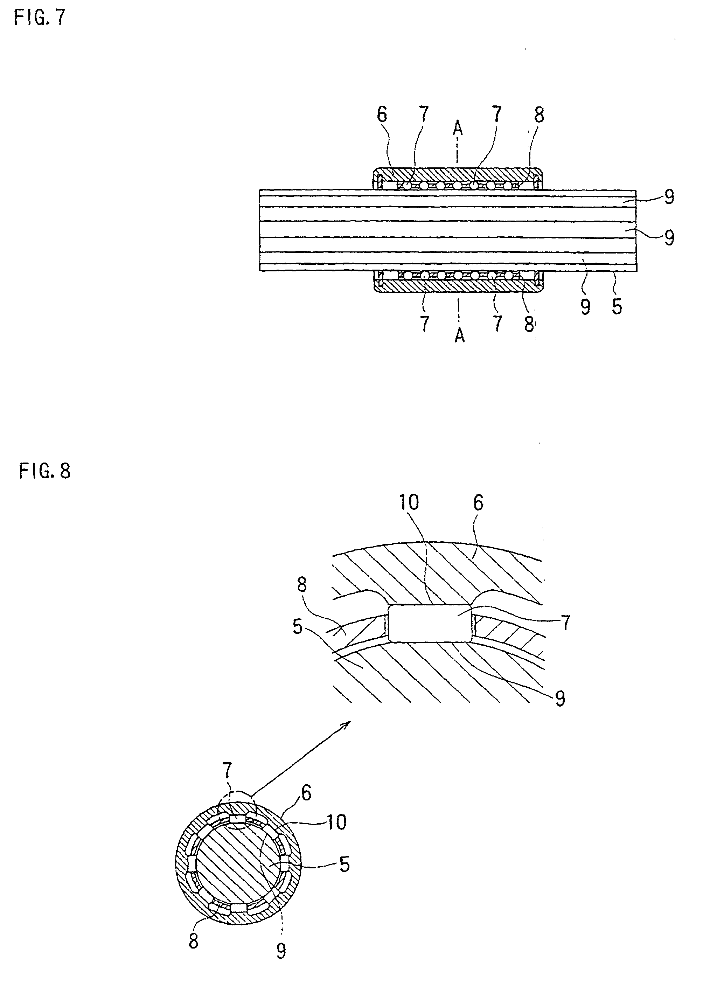

Figs. 7 and 8 show a linear bearing with a conventional structure as a second example (B). Fig. 7 is a vertical sectional view, and Fig. 8 is an A-A sectional view of Fig.7 with a partially expanded view.

The linear bearing shown in these drawings is composed of a guide shaft 5, an outer cylinder 6 provided around the guide shaft 5 relatively movably in the axial direction, many rollers 7 provided between the guide shaft 5 and the outer cylinder 6, and a cage 8 provided in the clearance between the guide shaft 5 and the outer cylinder 6 for holding the many rollers 7. The outer surface of the guide shaft 5 and the inner surface of the outer cylinder 6 have flat faces 9 and 10 facing each other in parallel to each other as rolling faces along which the rollers 7 roll. The linear bearing is called a linear roller bearing.

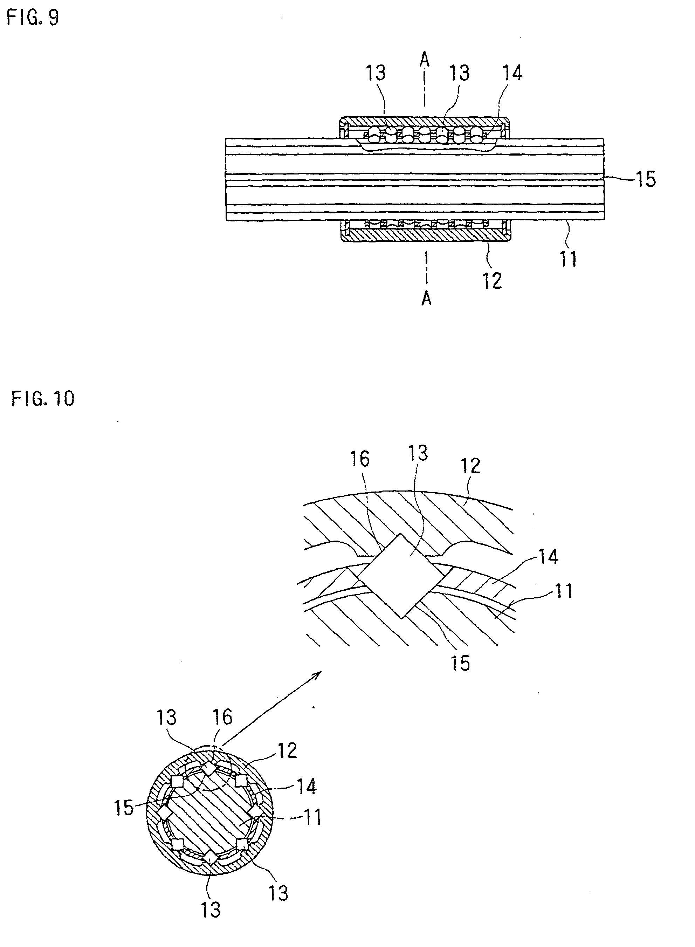

Figs. 9 and 10 show a linear bearing with a conventional structure as a third example (C). Fig. 9 is a vertical sectional view, and Fig. 10 is an A-A sectional view of Fig.9 with a partial expanded view.

The linear bearing shown in these drawings is composed of a guide shaft 11, an outer cylinder 12 provided around the guide shaft 11 relatively movably in the axial direction, many rollers 13 provided between the guide shaft 11 and the outer cylinder 12, and a cage 14 provided in the clearance between the guide shaft 11 and the outer cylinder 12 for holding the many rollers 13. In the linear bearing, the outer surface of the guide shaft 11 and the inner surface of the outer cylinder 12 have $90_o$ V grooves 15 and 16 formed to face each other in the axial direction as rolling faces along which the rollers 13 roll, and the many rollers 13 are disposed in these V grooves 15 and 16 by the cage 14 in such a manner that the rolling axes of the rollers may be perpendicular to each other alternately. This linear bearing is called a linear cross roller bearing.

The actions of the linear bearings with these structures are not described here in detail, since they are well-known.

The conventional linear bearings (A), (B) and (C) described above have the following problems.

At first, in the linear bearing (A), since rigid balls are used as rolling bodies provided between the guide shaft and the outer cylinder, the rigid balls contact the rolling faces of the guide shaft and the outer cylinder at points. So, since large contact pressures act at the contact points, the load capacity is small.

On the contrary, in the linear bearings (B) and (C), since rollers are used instead of rigid balls as rolling bodies provided between the guide shaft and the outer cylinder, the rollers contact the rolling faces of the guide shaft and the outer cylinder at lines. So, the load capacity is larger. However, in the linear bearing (B), flat faces as rolling faces must be formed on the outer surface of the guide shaft and the inner surface of the outer cylinder, to increase the machining work, and since the parallelism of the flat faces is important, an advanced machining technique is necessary to inevitably raise the production cost. In the linear bearing (C), since the rolling faces are V grooves, the parallelism is as important as the flat faces, and in addition, to let the V grooves of the respective sides accurately face each other, the circumferential pitch of the V grooves is important to require a further higher machining technique.

Furthermore, in the linear bearings (B) and (C), the rotation of the outer cylinder around the guide shaft is inhibited. So, when the guide shaft and the outer cylinder are installed to the respective elements of the apparatus to be mounted with the linear bearing, it is necessary to accurately position the respective elements, making the adjustment work complicated and very troublesome.

SUMMARY OF THE INVENTION

The object of the present invention is to solve the above mentioned problems of the prior art, by providing a linear bearing having a large load capacity, easy to manufacture, lower in production cost, and easy to adjust in the installation on an apparatus.

This object can be achieved by a linear bearing comprising the features of claim 1.

In this linear bearing, it is optimum that the radius of the circular cylindrical surface formed as the inner wall of the outer cylinder or the radius of the circular cylindrical surfaces of the grooves is set at 1.04 to 1.08 times the radius of the circular arcs of the circular arc rotation faces, and that the radius of the circular cylindrical surfaces of the grooves is equal to the radius of the circular cylindrical surface formed as the inner wall of the outer cylinder.

In this linear bearing, the rollers have their peripheral circular arc rotation faces kept in contact with the circular cylindrical surface formed as the inner wall of the outer cylinder and the circular cylindrical surfaces of the grooves in the guide shaft. So, the contacts are substantially linear, and the load capacity can be kept large. Furthermore, in order to form the rolling faces of the outer cylinder and the guide shaft, in contact with which the rollers roll, it is only required to machine the grooves each with a circular cylindrical surface, in the outer surface of the guide shaft. So, the accuracy in the pitch of the grooves around the guide shaft is not so important, to allow easier machining.

BRIEF DESCRIPTION OF THE DRAWINGS

Fig.1 is a vertical sectional view showing a preferred embodiment of the linear bearing of the present invention.

Fig. 2 is an A-A sectional view of Fig. 1.

Fig. 3 is an illustration showing a partially expanded view of Fig. 2.

Fig. 4 is an illustration showing the view of Fig. 2, without any roller for better understanding.

Fig. 5 is a vertical sectional view showing the structure of a conventional linear bearing as a first example.

Fig. 6 is an A-A sectional view of Fig. 5 with a partially expanded view.

Fig. 7 is a vertical sectional view showing the structure of a conventional linear bearing as a second example.

Fig. 8 is an A-A sectional view of Fig. 7 with a partially expanded view.

Fig. 9 is a vertical sectional view showing the structure of a conventional linear bearing as a third example.

Fig. 10 is an A-A sectional view of Fig. 9 with a partially expanded view.

DETAILED DESCRIPTION OF THE PREFERRED EMBODIMENT

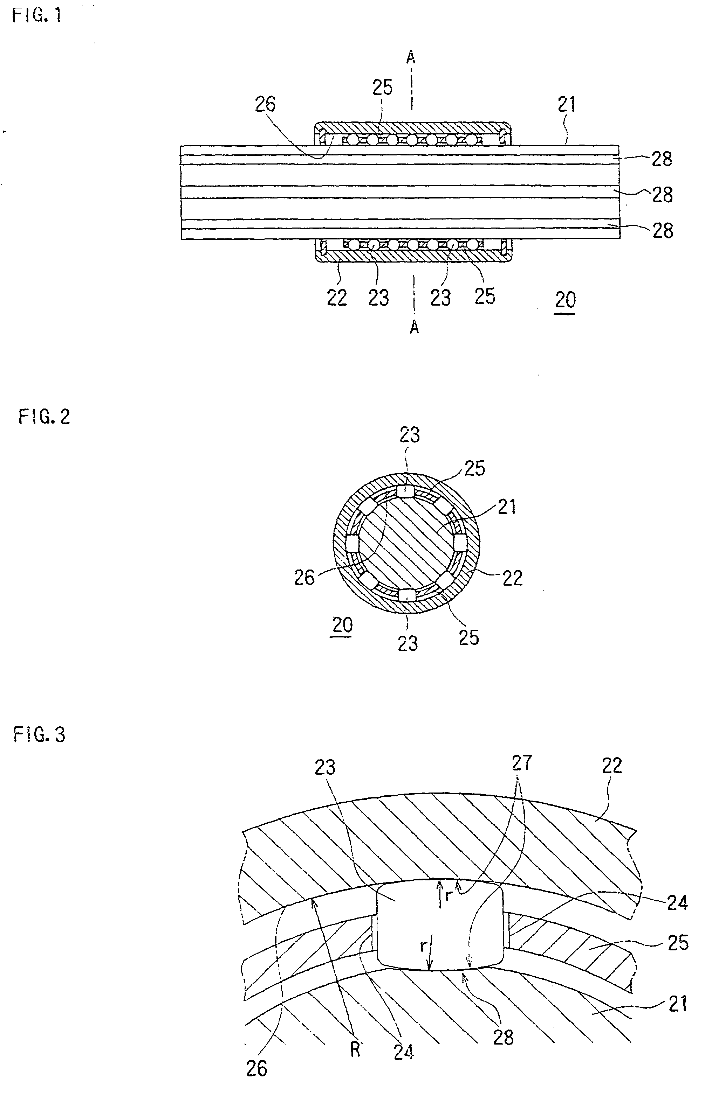

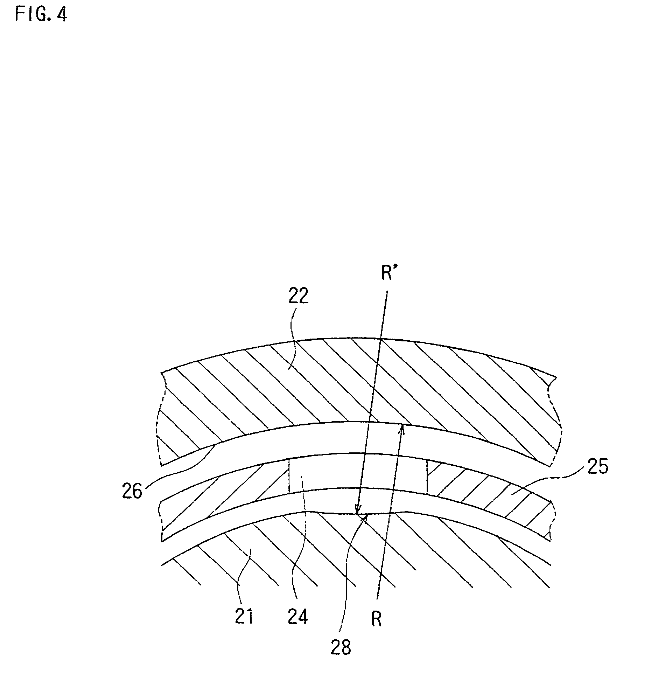

A preferred embodiment of the present invention is described below in detail in reference to attached drawings of Figs. 1 to 4.

In these drawings, symbol 20 generally indicates a linear bearing. The linear bearing 20 is composed of a guide shaft 21, an outer cylinder 22 provided around the guide shaft 21 relatively movably in the axial direction, many rollers 23 provided between the guide shaft 21 and the outer cylinder 22, and a cage 25 provided in the clearance between the guide shaft 21 and the outer cylinder 22 for holding the many rollers 23 by keeping the rollers 23 engaged with the holding holes 24 formed in the cage 25. Fig. 1 shows only a part of the guide shaft 21, and its length can be adequate. The basic constitution is the same as that described for the conventional linear bearing (B).

However, in the linear bearing 20 of the present invention, unlike the conventional linear bearing (B), the outer cylinder 22 has a circular cylindrical surface formed as the inner wall 26, as shown in Figs. 2 to 4, and each of the rollers 23 is like a barrel having an outwardly bulging circular arc rotation face 27 as its peripheral surface. And the radius r of the circular arc of the circular arc rotation face 27 of the roller 23 is smaller than the radius R of the circular cylindrical surface formed as the inner wall 26 of the outer cylinder 22, and the guide shaft 21 has grooves 28 formed in the axial direction; each having a circular cylindrical surface with a radius R' larger than the radius r of the circular arc of the circular arc rotation face 27 of the roller 23.

In this embodiment, eight grooves 28 are formed in the axial direction at equal intervals around the guide shaft 21. The cage 25 has eight rows of holding holes 24 corresponding to the eight grooves 28, and each of the rows has seven holding holes 24.

Therefore in this embodiment, fifty six rollers 23 are held by the cage 25 in the clearance between the guide shaft 21 and the outer cylinder 22.

In this preferred embodiment, the radius R of the circular cylindrical surface formed as the inner wall 26 of the outer cylinder 22 or the radius R' of the circular cylindrical surfaces of the grooves 28 is set at 1.04 to 1.08 times the radius r of the circular arcs of the circular arc rotation faces 27. Furthermore, in this preferred embodiment, the radius R' of the circular cylindrical surfaces of the grooves 28 is equal (or almost equal) to the radius R of the circular cylindrical surface formed as the inner wall 26 of the outer cylinder 22.

This can be expressed by the following formula:

(Radius R of the circular cylindrical surface formed as the inner wall 26 of the outer cylinder 22) = (Radius R' of the circular cylindrical surfaces of the grooves 28) = (or ≈) (Radius r of the circular arcs of the circular arc rotation faces 27) x 1.04 ∼ 1.08

The linear bearing 20 of the present invention constituted as described above acts as described below.

First of all, in the linear bearing 20, the peripheral circular arc rotation faces 27 of the rollers 23 contact the circular cylindrical surface formed as the inner wall 26 of the outer cylinder 22 and the circular cylindrical surfaces of the grooves 28 of the guide shaft 21, and since the radius R of the circular cylindrical surface formed as the inner wall 26 of the outer cylinder 22 and the radius R' of the circular cylindrical surfaces of the grooves 28 is set, for example, at about 1.04 to 1.08 times the radius r of the circular arcs of the circular arc rotation faces 27, their contacts are substantially linear, and the load capacity can be kept large.

Furthermore, in this linear bearing 20, in order to form the rotation faces of the outer cylinder 22 and the guide shaft 21, in contact with which the rollers 23 roll, it is only required to machine the grooves 28 each with a circular cylindrical surface, in the outer surface of the guide shaft 21. That is, while the rollers 23 are required to be engaged with the circular cylindrical surfaces of the predetermined grooves in the guide shaft 21, they can be engaged at any positions with the circular cylindrical surface formed as the inner wall 26 of the outer cylinder 22. So, the accuracy in the pitch of the grooves 28 around the guide shaft 22 is not so important, to allow easier machining.

Moreover, because of the above constitution, the guide shaft 21 and the outer cylinder 22 can rotate relatively. So, when the guide shaft 21 and the outer cylinder 22 are installed to the respective elements of the apparatus to be mounted with the linear bearing, the adjustment in the rotating direction is possible, and therefore, the adjustment at the time of installation is easy, to save trouble. Industrial Applicability

The present invention as described above provides the following advantages as a linear bearing for a high load and/or an offset load, for example, in a guide of a press or a guide of a die set.

a. In this linear bearing, since the rollers have their peripheral circular arc rotation faces kept in contact with the circular cylindrical surface formed as the inner wall of the outer cylinder and with the circular cylindrical faces of the grooves of the guide shaft, the contacts are substantially linear, and the load capacity can be kept large.

b. In order to form the rolling faces of the outer cylinder and the guide shaft, in contact with which the rollers roll, it is only required to machine the grooves each with a circular cylindrical surface in the outer surface of the guide shaft, and since the accuracy in the pitch of the grooves around the guide shaft is not so important, machining is very easy and the production cost can be kept low.

c. The guide shaft and the outer cylinder can rotate relatively. So, when the guide shaft and the outer cylinder are installed to the respective elements of the apparatus to be mounted with the linear bearing, the adjustment in the rotating direction is possible, and therefore, the adjustment at the time of installation is easy, to save trouble.

**Claims**

**1.** A linear bearing (20), comprising:

a guide shaft (21),
an outer cylinder (22) provided around the guide shaft (21) relatively movably in the axial direction,
a plurality of rollers (23) provided between the guide shaft (21) and the outer cylinder (22), and
a cage (25) provided in the clearance between the guide shaft (21) and the outer cylinder (22) for holding the plurality of rollers (23),

**characterized in that**

the outer cylinder (22) has a circular cylindrical surface as its inner wall (26),
each of the rollers (23) has an outwardly bulging, circular arc rotation face (27) as its peripheral surface,
the radius (r) of the circular arcs of the circular arc rotation faces (27) of the rollers (23) is smaller than the radius (R) of the circular cylindrical surface formed as the inner wall (26) of the outer cylinder (22), and
the guide shaft (21) has grooves (28) in the axial direction, each having a circular cylindrical surface with a radius (R') larger than the radius (r) of the circular arcs of the circular arc rotation faces (27) of the rollers (23).

2. The linear bearing according to claim 1, wherein the radius (R) of the circular cylindrical surface formed as the inner wall (26) of the outer cylinder (22) and the radius (R') of the circular cylindrical surfaces of the grooves (28) is set at 1.04 to 1.08 times the radius (r) of the circular arcs of the circular arc rotation faces (27) of the rollers (23).

3. The linear bearing according to claim 1 or 2, wherein the radius (R') of the circular cylindrical surfaces of the grooves (28) is equal to the radius (R) of the circular cylindrical surface formed as the inner wall (26) of the outer cylinder (22).

**Patentansprüche**

1. Linearlager (20) mit:

einer Führungsachse bzw. -welle (21),
einem äußeren Zylinder (22), der um die Führungsachse (21) in der Axialrichtung relativ beweglich vorgesehen ist,
mehreren zwischen der Führungsachse (21) und dem äußeren Zylinder (22) vorgesehenen Rollen (23), und
einem Käfig (25), der in dem Zwischenraum zwischen der Führungsachse (21) und dem äußeren Zylinder (22) zum Halten der mehreren Rollen (23) vorgesehen ist,

**dadurch gekennzeichnet, dass**
der äußere Zylinder (22) eine kreisförmige zylindrische Oberfläche als seine Innenwand (26) aufweist,
jede der Rollen (23) an ihrer Umfangsfläche eine nach außen gewölbte Kreisbogen-Rotationsfläche (27) aufweist,
der Radius (r) der Kreisbögen der Kreisbogen-Rotationsflächen (27) der Rollen (23) kleiner ist als der Radius (R) der als Innenwand (26) des äußeren Zylinders (22) ausgebildeten kreisförmigen zylindrischen Oberfläche, und
die Führungsachse (21) Nuten bzw. Rillen (28) in der Axialrichtung hat, von denen jede eine kreisförmige zylindrische Oberfläche mit einem Radius (R'), der größer ist als der Radius (r) der Kreisbögen der Kreisbogen-Rotationsflächen (27) der Rollen (23), aufweist.

2. Linearlager nach Anspruch 1, wobei der Radius (R) der als Innenwand (26) des äußeren Zylinders (22) ausgebildeten kreisförmigen zylindrischen Oberfläche und der Radius (R') der kreisförmigen zylindrischen Oberflächen der Nuten bzw. Rillen (28) auf das 1,04-fache bis 1,08-fache des Radius (r) der Kreisbögen der Kreisbogen-Rotationsflächen (27) der Rollen (23) eingestellt sind.

3. Linearlager nach Anspruch 1 oder 2, wobei der Radius (R') der kreisförmigen zylindrischen Oberflächen der Nuten bzw. Rillen (28) gleich dem Radius (R) der als Innenwand (26) des äußeren Zylinders (22) ausgebildeten kreisförmigen zylindrischen Oberfläche ist.

**Revendications**

1. Palier linéaire (20), comprenant :

un arbre de guidage (21),
un cylindre externe (22) placé autour de l'arbre de guidage (21) et mobile relativement dans le sens axial,
une pluralité de rouleaux (23) disposés entre l'arbre de guidage (21) et le cylindre externe (22), et
une cage (25) disposée dans le dégagement entre l'arbre de guidage (21) et le cylindre externe (22) pour retenir la pluralité de rouleaux (23),

**caractérisé en ce que**
le cylindre externe (22) a une surface cylindrique circulaire en tant que paroi interne (26),
chacun des rouleaux (23) a une face de rotation en arc de cercle bombée vers l'extérieur (27) au niveau de sa surface périphérique,
le rayon (r) des arcs circulaires des faces de rotation en arc de cercle (27) des rouleaux (23) est inférieur au rayon (R) de la surface cylindrique circulaire formée en tant que paroi interne (26) du cylindre externe (22), et
l'arbre de guidage (21) a des rainures (28) dans le sens axial, ayant chacune une surface cylindrique circulaire avec un rayon (R') supérieur au rayon (r) des arcs circulaires des faces de rotation en arc de cercle (27) des rouleaux (23).

2. Palier linéaire selon la revendication 1, dans lequel le rayon (R) de la surface cylindrique circulaire formée en tant que paroi interne (26) du cylindre externe (22) et le rayon (R') des surfaces cylindriques circulaires des rainures (28), sont réglés à la valeur de 1,04 à 1,08 fois le rayon (r) des arcs circulaires des faces de rotation en arc de cercle (27) des rouleaux (23).

3. Palier linéaire selon la revendication 1 ou 2, dans lequel le rayon (R') des surfaces cylindriques circulaires des rainures (28) est égal au rayon (R) de la surface cylindrique circulaire formée en tant que paroi interne (26) du cylindre externe (22).

FIG. 1

FIG. 2

FIG. 3

7

FIG. 4

FIG. 5

FIG. 6

FIG. 7

FIG. 8

FIG. 9

FIG. 10